# EUROPEAN PATENT APPLICATION

(11) **EP 1 857 919 A2**
(43) Date of publication of application: **21.11.2007**
(21) Application number: 07250705.6
(22) Date of filing: 20.02.2007
(51) Int. Cl.: G06F 3/06, G06F 21/00, G11B 19/20

(54) **Certified HDD with network validation**

(30) Priority: 12.05.2006 US 433023
(71) Applicant: Hitachi Global Storage Technologies Netherlands B.V., 1076 AZ Amsterdam (NL)
(72) Inventor: Wilson, Bruce A., San Jose, CA 95119 (US); New, Richard M.H., San Jose, CA 95120 (US); Campello de Souza, Jorge, Cupertino, CA 95014 (US)
(74) Representative: Calderbank, Thomas Roger

(57) **Abstract**

A data storage device can be validated through a network before the data storage device can be operated. In one embodiment, the data storage device includes a magnetic disk and a head assembly having a read/write head which reads and writes data from/on the magnetic disk. The data storage device further includes a controller configured to control the head assembly to read/write data to/from the magnetic disk. In addition, the data storage device includes a secure area of the magnetic disk containing a private key. The private key is one of a pair of cryptographically linked keys and the other of the cryptographically linked keys is a public key. Furthermore, the data storage device includes a memory located within the controller containing an auxiliary key, the auxiliary key being used to encrypt or decrypt the private key.

## Description

This invention relates generally to hard disk drives or other data storage devices. More particularly, the invention provides a data storage device that is validated through a network before the data storage device can be operated.

The use of hard disk drives and other data storage devices has become increasingly widespread with the advent of recent technological improvements. While once almost exclusively used in the realm of computing, data storage devices can be found in digital music players, game consoles, and other electronic host devices to provide a reliable and effective location for data storage. Data storage devices are particularly effective for storing different forms of media, such as music, electronic games, or videos, where the data storage device can be used to store a plethora of media files.

Several problems can arise from the use of data storage devices within electronic host devices. For example, electronic host devices such as game consoles, personal video recorders (PVR), and cable set-top boxes often use a data storage device such as a hard disk drive to store licensed content that is not meant for widespread distribution beyond the immediate owner. The content may be licensed for a single unique data storage device. The owner may, however, attempt to clone the data storage device or duplicate the content stored on the devices against the wishes of the manufacturer of the host device and the owner of the media content, who have a vested interest in securely maintaining the contents of the data storage device. Alternatively, a data storage device may be sold with special features that enable content protection of the data being stored on the device. Steps would need to be taken to ensure that only compliant data storage devices can be used with the host device, instead of third party data storage devices.

In another example, a host device manufacturer such as a PVR manufacturer may sell a basic host unit with minimal storage at cost or at a loss in order to improve market penetration or sales. Storage expansion units may be sold at a price premium to compensate for a reduced price on the basic host unit. It may be possible to swap the current data storage device within the host device with one of a larger capacity to increase the storage capacity of the host device without the manufacturer's approval. To address this concern, the manufacturer may try to prevent third parties from selling compatible storage expansion units or having users modify their devices to accommodate the third part storage expansion units. Alternatively, a cable company may wish to sell PVR storage capacity as an add-on to their existing cable TV service for an additional charge. This would also require some sort of proprietary tie-in to prevent non-licensed drives from being used in the host devices.

The present invention is directed to hard disk drives or other data storage devices. More particularly, the invention provides a data storage device that can be validated through a network before the data storage device can be operated. In specific embodiments, a method of authenticating a data storage device being used within a host device could be implemented to prevent undesired duplication or replacement of the data storage device or its contents. It would be recognized that the invention has a much broader range of applicability.

In accordance with an aspect of the present invention, a data storage device comprises a magnetic disk; a head assembly having a read/write head which reads and writes data from/on the magnetic disk; a controller configured to control the head assembly to read/write data to/from the magnetic disk; a secure area of the magnetic disk containing a private key, the private key being one of a pair of cryptographically linked keys which includes the private key and a public key; and a memory located within the controller and containing an auxiliary key, the auxiliary key being used to encrypt or decrypt the private key. Alternatively, the secure area of the magnetic disk contains a private key which is a symmetric key.

In some embodiments, the secure area of the magnetic disk is outside the normally addressable areas of the magnetic disk. The memory may be a read-only memory or a write-once memory such as a fuse or an antifuse within the controller that can be programmed once. The auxiliary key may be a symmetric key. The auxiliary key may be a shared with one or more other data storage devices. The auxiliary key may be unique to the data storage device. The private key may be encrypted and decrypted within the controller and does not pass through any data buses in unencrypted form. A digital certificate from a certificate authority may be stored with the private key, the digital certificate comprising the public key of the data storage device plus a unique identifier for the storage device, all encrypted with a private key of the certificate authority.

In specific embodiments, a host device used for media applications comprises the above data storage device; a host device controller configured to enable read/write access to the data storage device, the host device controller further configured to receive data stored on the data storage device and transmit the data to an output device connected to the host device; and a communication bus configured to allow data to be transferred between the device controller and the storage device. An input device may be configured to provide input for operation of the host device.

In accordance with another aspect of the present invention, a data storage device comprises a magnetic disk; a head assembly having a read/write head which reads and writes data from/on the magnetic disk; a controller configured to control the head assembly to read/write data to/from the magnetic disk, and a memory located within the controller and containing a private key, the private key being one of a pair of cryptographically linked keys, the other of the cryptographically linked keys being a public key.

In accordance with another aspect of the invention, a device management system comprises a host device; a data storage device coupled to the host device, the data storage device having a unique identifier used to distinguish the data storage device from other data storage devices; a service provider which maintains a list of active data storage devices which are already in use, the service provider receiving the unique identifier from the host device and comparing the unique identifier with a list of active data storage devices to determine if the unique identifier is already in use; and a communication connection used to transmit information between the host device and the service provider.

In some embodiments, the service provider further maintains a revocation list of data storage systems whose unique identifiers have been compromised or duplicated. The service provider further maintains a list of all data storage devices that have been previously registered or attempted to register with the service provider. If the unique identifier from the data storage device matches a unique identifier of another data storage device on the list of active data storage devices, a revocation message is transmitted to the host device and functioning of the data storage device with the host device is not permitted. If the unique identifier from the data storage device does not match any unique identifiers of another data storage device on the list of active data storage devices, the unique identifier of the data storage device is added to the list of active data storage devices, and a message is transmitted to the host device to allow for functioning of the data storage device with the host device. At least part of the communication connection is through the Internet.

In accordance with another aspect of the present invention, a method of validating a media device comprises providing a data storage device coupled with a host device, the data storage device having a unique identifier that distinguishes it from other data storage devices; submitting the unique identifier through the host device to a service provider; checking the unique identifier against a list of active devices in operation to determine if a data storage device with the same unique identifier is already in operation; and if a data storage device with the same unique identifier is already in operation, transmitting a revocation message to the host device and not allowing the data storage device to operate with the host device.

In some embodiments, the method further includes, if a data storage device with the same unique identifier is not in operation, adding the data storage device to the list of active devices in operation, and transmitting a message from the service provider to the host device to allow for functioning of the data storage device with the host device. The method may further include checking the unique identifier against a revocation list comprising a list of data storage devices whose unique identifies have been compromised or duplicated; and if the unique identifier matches one or more entries on the revocation list, transmitting a revocation message to the host device and not allowing the data storage device to operate with the host device. The service provider is also a certificate authority. The unique identifier is encrypted prior to submitting the unique identifier through the host device to a service provider. The unique identifier is a serial number of the data storage device.

### IN THE DRAWINGS

Fig. 1 is a simplified exemplary diagram of a data storage system that shows a host device coupled with a data storage device.

Fig. 2 is an exemplary simplified perspective view of a hard disk drive (HDD) that can be used as a data storage device within computing device according to an embodiment of the present invention.

Fig. 3 is an exemplary simplified functional block diagram of the HDD according to an embodiment of the present invention.

Fig. 4 is an exemplary diagram of a simplified process flow showing communication between a data storage device and a host device to establish a secure authorization according to an embodiment of the present invention.

Figs. 5-7 are exemplary simplified diagrams of data storage device implementations which store the private key in different locations according to embodiments of the present invention.

Fig. 8 is an exemplary simplified diagram of a host device communicating with a service provider to verify and register a data storage device within the host device according to an embodiment of the present invention.

Fig. 9 is an exemplary simplified flowchart of a host device communicating with a service provider to verify and register the data storage device within the host device according to an embodiment of the present invention.

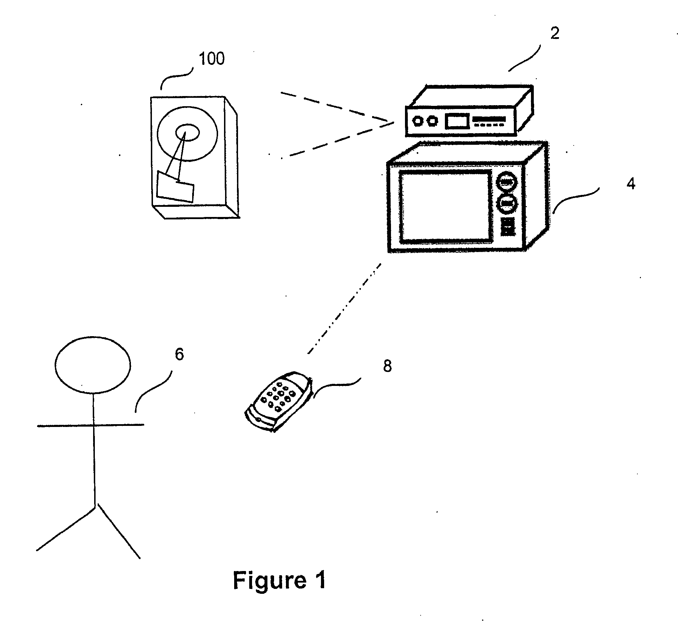

Fig. 1 is a simplified exemplary diagram of a data storage system that shows a host device coupled with a data storage device. A host device 2 containing a data storage device 100 is provided. The host device may be a personal computer, media center personal computer, game console, personal video recorder, cable set-top box, or other device which includes the data storage device 100. The data storage device 100 may be a hard disk drive, a solid-state memory device such as a USB or flash drive, or other device that stores data. The data storage device 100 is typically contained within the housing of the host device 2. For example, a hard disk drive may be contained within the external housing of the host device 2. The host device 2 may also possess an operating system used to operate the device, such as Windows XP, Linux, Windows CE, Palm, a proprietary operating system, or others. In other embodiments, the data storage device 100 need not be physically contained within the host device 2.

The host device 2 may also be coupled with an output device 4 for viewing by the user 6. The output device may be a television, computer display, music system or other device capable of outputting a signal from the host device 2. A remote control 8 may also be included to assist the user 6 with the operation of the host device 2 and the output device 4. The host device 2 may be coupled with the output device 4 by a physical connection such as a Ethernet wire or other cable. Alternatively, a wireless connection to couple the host device 2 with the output device 4. The wireless connection may be established through a variety of different wireless protocols, including but not limited to TCP/IP, 802.11, Bluetooth, and radio signals. Additional connections may also be present on the host device 2 to allow the host device 2 to transmit and receive data from outside sources. For example, CD's, DVD's game disks, or other media may be used in conjunction with the host device 2, or the host device 2 may receive and sent data through an internet, cable, satellite or other connection.

The data storage device 100 may contain files that can be opened or played for the user. For example, the files may be media files which include video game data, recorded video, digital music files, movies, or other content that is located on the data storage device 2. This media content may be licensed by the creators or owners of the content for use only within the specific data storage device 100, and not with any other devices. The user may not be permitted to transfer or copy the material on the data storage device 100 to another medium, or may not be permitted to remove or replace the existing data storage device 100 with another data storage device offering different performance characteristics, such as greater storage space. However, physical measures put in place to prevent removal of the data storage device 100 from the host device 2 may be difficult to effectively implement, as users may develop alternative methods to remove and replace the data storage device 100. However, a method of authenticating the data storage device 100 could be used to determine if the data storage device 100 is permitted with use in the host device 2. By authenticating the data storage device 100 with the host device 2, it can be determined if a suitable data storage device 100 is being used in conjunction with the host device 2.

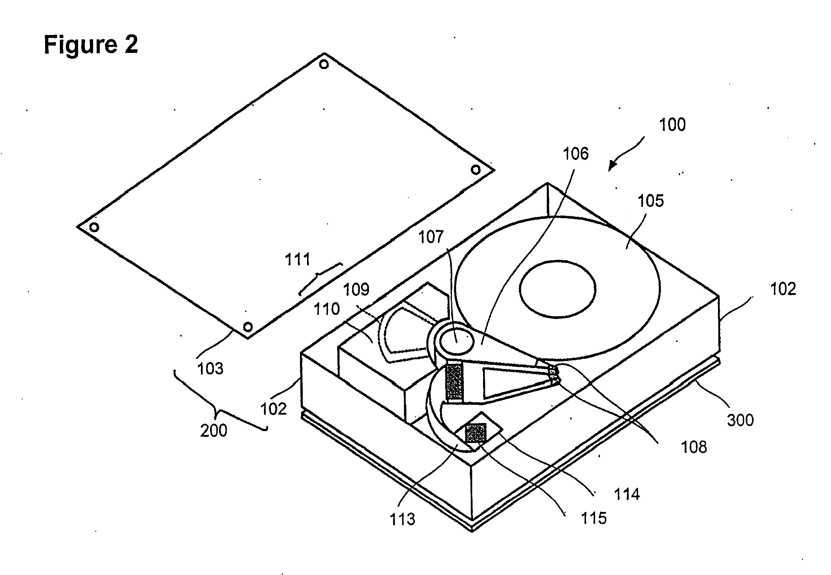

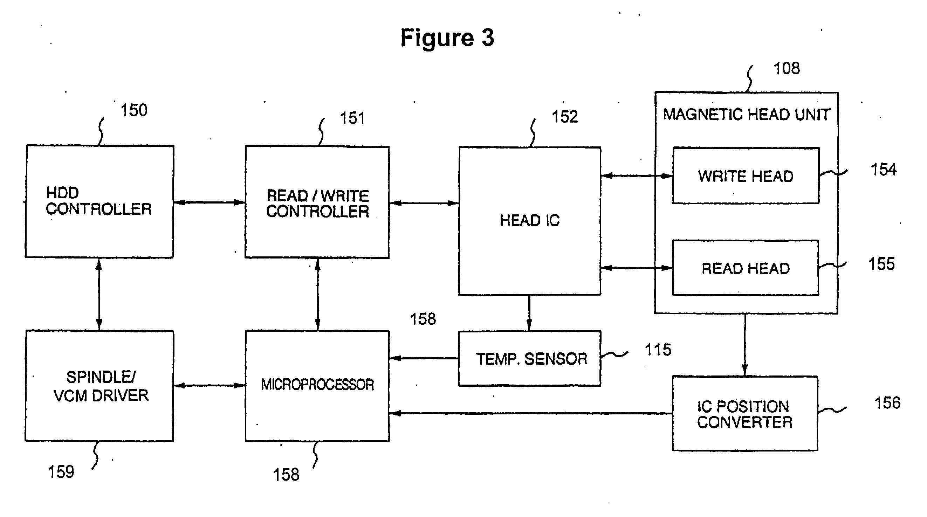

Fig. 2 is an exemplary simplified perspective view of a hard disk drive (HDD) that can be used as the data storage device 100 with the host device 2 according to an embodiment of the present invention. The data storage device 100 may be physically contained within the host device 2. Fig. 3 is an exemplary simplified functional block diagram of the HDD according to an embodiment of the present invention. As shown in Fig. 2, the HDD 100 includes a disk enclosure 200 having a top cover 103 installed to seal the open top of a box-shaped base 102, which may be made, for instance, of an aluminum alloy. The top cover 103 is made, for instance, of stainless steel, and is fastened by fasteners to the base 102 with a sealing member (not shown), which is shaped like a rectangular frame. The disk enclosure 200 contains a spindle motor (not shown), which comprises, for instance, a hub-in, three-phase DC servo motor. The spindle motor imparts rotary drive to a magnetic disk 105, which is a storage medium. One or more units of the magnetic disk 105 are installed in compliance with the storage capacity requirements for the HDD 100. A card 300 is attached to the lower surface of base 102. The card 300 carries a signal processing circuit, a drive circuit for spindle motor, and other components described later.

An actuator arm 106 is mounted within the disk enclosure 200. The middle section of the actuator arm 106 is supported above the base 102 so that it can pivot on a pivot axis 107. A composite magnetic head 108 is mounted on one end of the actuator arm 106. A VCM (voice coil motor) coil 109 is mounted on the remaining end of the actuator arm 106. The VCM coil 109 and a stator 110, which is made of a permanent magnet and fastened to the disk enclosure 200, constitute a VCM 111. When a VCM current flows to the VCM coil 109, the actuator arm 106 can move to a specified position over the magnetic disk 105. This movement causes the composite magnetic head 108 to perform a seek operation. The magnetic disk 105 is driven to rotate around a spindle axis of the spindle motor. When HDD 100 does not operate, the magnetic disk 105 comes to a standstill.

As seen in Fig. 3, the composite magnetic head unit 108 may be a combination of an ILS (integrated lead suspension) (not shown), a read head 155, which comprises a GMR (giant magnetoresistive) sensor, and a write head 154, which comprises an induction-type converter. The read head 155 reads servo information when the head unit 108 reads data, writes data, or performs a seek operation. For a data read operation, the read head 155 also reads data between items of servo information. For a data write or data read, the actuator arm 106 pivots over the surface of the magnetic disk 105 during its rotation so that the composite magnetic head unit 108 performs a seek operation to scan for an arbitrary track on the magnetic disk 105. In this instance, the ABS (air bearing surface) of composite magnetic head unit 108, which faces the magnetic disk 105, receives a lift force due to an air current generated between the ABS and the magnetic disk 105. As a result, the composite magnetic head unit 108 constantly hovers a predetermined distance above the surface of the magnetic disk 105.

The read head 155 and write head 154, which constitute the composite magnetic head unit 108, are electrically connected to the head IC 152. The head IC 152 is mounted on a lateral surface of the pivot axis 107 of the actuator arm 106. One end of a flex cable 113 is connected to the head IC 152 to permit data exchange with the card 300. A connector 114 is attached to the remaining end of the flex cable 113 for connecting to the card 300. A temperature sensor 115 may be mounted on the upper surface of the connector 114 to measure the temperature inside the disk enclosure 200 (the ambient temperature for the magnetic disk 105).

The card 300 includes electronic circuits shown in Fig. 3, which control the operation of the actuator arm 106 and perform data read/write operations in relation to the magnetic disk 105. The card 300 controls the rotation of the magnetic disk 105 through a spindle/VCM driver 159 and drives the VCM coil 109 to control the seek operation of the actuator arm 106.

The HDD controller 150 transfers data between an external host (not shown) and the magnetic disk 105, generates a position error signal (PES) from servo data, and transmits the positional information about the composite magnetic head 108 to a read/write controller 151 and a microprocessor 158. In accordance with the control information from the microprocessor 158, the spindle/VCM driver 159 drives the VCM coil 109 to position the composite magnetic head 108 on the specified track. The positioning of the magnetic head unit 108 is determined by an IC position converter 156 in response to a signal from the magnetic head unit 108. The microprocessor 158 further interprets a command that is transmitted from an external host (not shown) through the HDD controller 150, and instructs the HDD controller 150 to perform a data read/write operation in relation to an address specified by the command. In accordance with the positional information about the composite magnetic head 108, which is generated by the HDD controller 150, the microprocessor 158 also transmits control information to the spindle/VCM driver 159 for the purpose of performing a seek operation to position composite magnetic head 108 on a specified track.

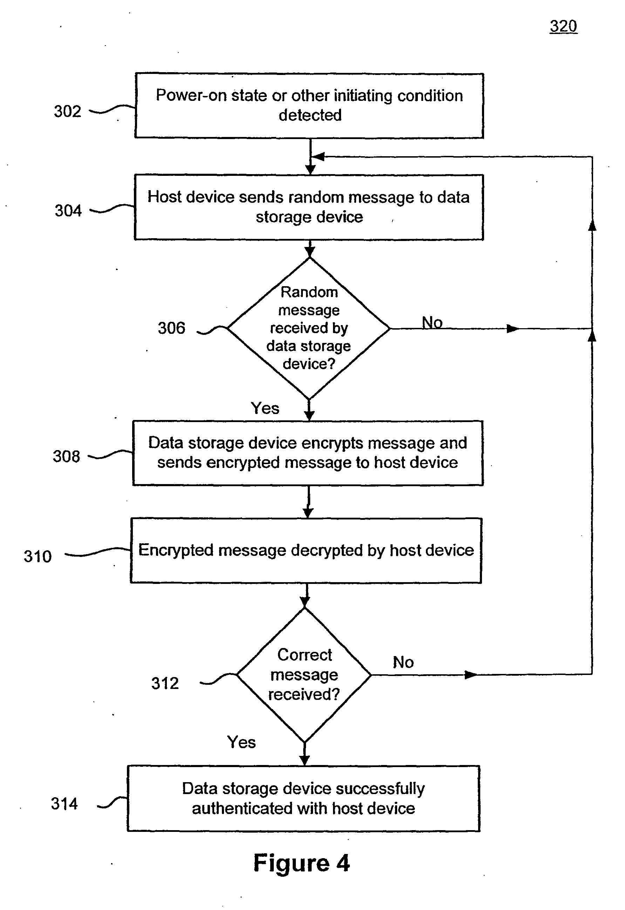

The data storage device 100 also possesses a unique private key and corresponding public key which are created during the manufacturing process of the data storage device. The private and public keys are used in a form of encryption called public-key encryption, where the combination of keys are used to securely encrypt and decrypt messages. The public and private keys are related mathematically, but the private key should not be determinable given the public key. The private key is closely guarded and is not disclosed to any other party, while the public key is distributed to the public and easily available. The use of the public and private keys of data storage device 100 to establish authentication between the data storage device and host device will be described in more detail in connection with Figs. 4-7.

In addition to the data storage device 100 possessing public and private keys, a certificate authority may exist that possesses its own set of public and private keys. The certificate authority functions as a trusted party known to both the host device 2 and the data storage device 100. For example, if both the host device 2 and the data storage device 100 are issued by the same company, the certificate authority will be a trusted party known to both. At the time of manufacture of the data storage device 100, the public key of the data storage device 100 may be concatenated with a unique identifier for the storage device and encrypted using the private key of the certificate authority. This constitutes a digital certificate that can be used to help authenticate different devices, in this case the data storage device 100 and the host device 2 to each other using the certificate authority. The digital certificate serves to state that the public key contained within the certificate does belong to the device denoted within the certificate. If the host device 2 trusts the certificate authority and can verify the digital signature of the certificate authority, then it can also verify that a certain public key does indeed belong to whoever is identified in the certificate. The certificate may be stored in the data storage device 100 with the unique public and private keys of the data storage device 100.

Fig. 4 is an exemplary diagram of a simplified process flow showing communication between a data storage device and a host device to establish a secure authorization according to an embodiment of the present invention. The process flow 320 includes step 302 for detecting a power-on state of the host device or other initiating condition, step 304 for sending a random message from the host device to the data storage device, step 306 for determining if the random message was received by the data storage device, step 308 for the data storage device to encrypt the message and send the encrypted message to the host device; step 310 for decrypting the encrypted message by the host device, step 312 for determining if the correct message was received, and step 314 for successfully authenticating the data storage device with the host device. Of course, there can be other variations, modifications, and alternatives.

In step 302, a power-on state or other initiating condition is fulfilled to begin the authentication process between the host device 2 and the data storage device 100. It is assumed that the host device 2 has been successfully coupled with the data storage device 100. Examples of alternative initiation conditions include but are not limited to: a hardware change being detected by the host device 2, establishment of a connection with an external device or medium such as the Internet, or the completion of a counter for an internal timer within the host device 2. The specific condition or conditions used to begin the authentication process may be selected by the manufacturer or designer of the host device 2, and may be different for various host devices dependent upon the specific implementation used.

In step 304, the host device 2 sends a random message to the data storage device 100. The message may be a randomly generated number, phrase, or other piece of random challenge data created by the host device 2. The advantage to using a randomly generated phrase is that a third party cannot simply replay the previous responses to an authorization request again to gain access. The randomly generated message is transmitted through a connection from the host device 2 to the data storage device 100, which may be a bus channel between the two devices. For example, the third party may obtain the public key of the data storage device 100, but without the private key it cannot issue an appropriate response. Additionally, if a new pair of public and private keys are generated by the third party, an appropriate digital certificate cannot be generated without the private key of the certificate authority.

In step 306, the data storage device 100 determines if the message has been received from the host device 2. Interference, hardware failure, or a bad connection between data storage device 100 and host device 2 may cause the message to not be properly sent from host device 2 or received by data storage device 100. The determination if the message has been received may be performed by keeping track of the amount of time that has elapsed since the message was sent in step 304 and comparing that to a preset timeout value. If the time elapsed since the wireless message has been sent exceeds the present timeout value, then the random message may be resent.

In step 308, the data storage device 100 encrypts the random message received from the host device 2. The encryption may be performed using public key encryption, which allows the different components of the data storage system to communicate securely without having prior access to a shared secret key. The message can be encrypted using the private key of the data storage device 100, which is only known to the data storage device. The encrypted message is then sent to the host device 2.

One of the advantages to using a randomly generated phrase is that a third party cannot simply replay the previous responses again to gain authorization. For example, the third party may obtain the public key of the data storage device 100 by listening on the communication bus between the data storage device 100 and the host device 2, but without the private key it cannot issue an appropriate response. Additionally, if a new pair of public and private keys are generated by the third party, an appropriate digital certificate cannot be generated without the private key of the certificate authority.

In step 310, the encrypted message is decrypted by the host device 2. If a certificate was used in conjunction with the encrypted message, the certificate is decrypted using the public key of the certificate authority, which is widely known. The result of that decryption is compared against the known public key of the data storage device 100 to confirm the identity of the data storage device 100. The message is further decrypted using the public key of the data storage device 100, and the result obtained. In step 312, the result is compared against the original data that was sent to the data storage device 100 in step 304. If an incorrect message is returned by the data storage device 100, the host device 2 can resend a new random message to the data storage device 100 in step 304. A new message is used to retest the validity of the private key held by the data storage device 100. If the correct message is received, authentication between the data storage device 100 and the host device 2 has been achieved in step 314.

In a specific embodiment, counters may be maintained to check the number of times messages are sent in step 304 or the number of times an incorrect message is sent as identified in step 312 to enhance security. For example, preprogrammed settings may only permit a fixed number of encrypted messages to be sent in step 304 until the authentication process is stopped for a certain period of time. Correspondingly, only a certain number of incorrect decrypted messages may be accepted in step 312 until the authentication process is halted.

While an exemplary authentication process has been illustrated in Fig. 4, other authentication processes could also be used. For example, multiple encryption keys may be used or private key cryptography may be used in conjunction with the encryption scheme described in Fig. 4.

To implement the authorization process flow shown in Fig. 4, a secure method of storing the private key for the data storage device 100 can be implemented. If the private key is put in an unsecured location or easily compromised, the identity of the data storage device 100 can be cloned or duplicated so that unlicensed copies of the data storage device 100 may be produced. Certain difficulties exist with attempting to store the private key in a secured location. For example, an idealized solution would provide a tamper-resistant module (TRM) which would not permit the private key to be extracted no matter what is done to it. However, would-be attackers often have a disparate variety of methods and resources to break the protection for the private key, making an absolutely foolproof solution impossible.

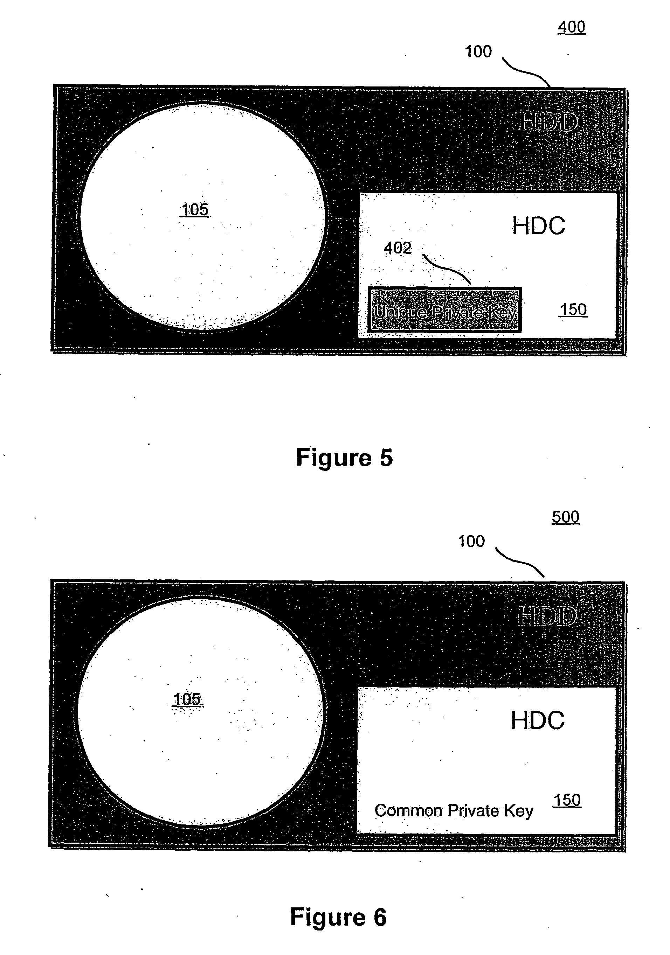

One solution to this problem is to make it economically infeasible for attackers to extract the private key by increasing the cost of extraction while greatly reducing the benefits of obtaining a single private key. By doing so, the economic benefit to attackers is greatly reduced, thus increasing the likelihood that the attackers would focus their efforts elsewhere. By increasing the cost of extraction, the direct cost to the attacker is increased in the form of financial resources, materials, and time. Similarly, by reducing the benefits to obtaining a single private key, attackers receive little benefit even after the key has been obtained. Several different schemes for the storage of the private key are discussed in connection with Figs. 5-7.

Fig. 5 is an exemplary simplified diagram of a data storage device implementation which stores the private key within the data storage device according to an embodiment of the present invention. For example, the data storage device 100 in diagram 400 may be a hard disk drive. The data storage device 100 includes one or more magnetic disks 105 as a storage medium, and a hard disk drive controller 150. The unique private key for the device may be stored in the hard disk controller 150 within a read-only memory (ROM) 402. The ROM 402 may be implemented as flash or solid-state memory, thus allowing the private key to be maintained even in the case of a power failure or outage. Individual fuse and antifuses may be 'blown' or set to encode the private key on the ROM 402. This provides a secure solution in that specific hardware intervention or specialized knowledge of hard drive microcode is needed in order to read the contents of the ROM 402.

Data storage devices are commonly manufactured in batches or large lots in the factory where multiple units are produced in rapid succession to optimize the throughput in the number of devices produced and reduce the amount of errors between devices. As a result, implementing changes such as the setting of each private key within each ROM 402 as a series of fuses and antifuses may prove expensive. The key may be stored into each hard drive controller 150 individually after the hard disk controller 150 is manufactured during the data storage device manufacturing process. In addition, the amount of non-volatile storage is increased on the data storage device 100, which correspondingly increases the total cost of the data storage device 100. Though relatively more expensive, this approach provides a high level of security and protection.

Fig. 6 is an exemplary simplified diagram of a data storage device implementation which stores the private key within the data storage device according to an embodiment of the present invention. For example, the data storage device 100 in diagram 500 may be a hard disk drive. The data storage device 100 includes one or more magnetic disks 105 as a storage medium, and a hard disk drive controller 150. The private key for the device may be stored in the hard disk controller 150 in a ROM or other storage location. However, the private key in Fig. 6 is a common key, meaning that the private key is shared between batches of the data storage device 100. The advantage of this implementation is that the cost for placing a shared private key within the data storage device 100 is low, as multiple data storage devices will all share the same private key. However, one of the disadvantages is that if a single common private key is stolen, all data storage devices sharing the same private key are compromised. This risk may be partially mitigated in that different common keys can be implemented for different batches of data storage devices. This technique also raises the cost of manufacture of the data storage devices, although it is less expensive than the above technique that provides device-specific identification. This implementation does not allow for device-specific identification, only that the data storage device 100 belongs to a certain class or batch of data storage devices.

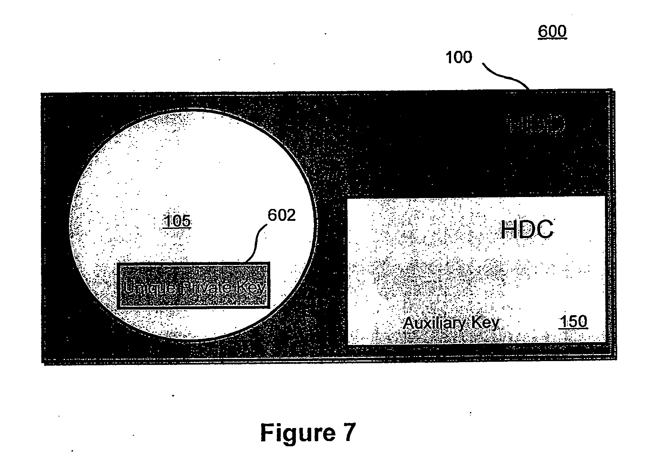

Fig. 7 is an exemplary simplified diagram of a data storage device implementation which stores the private key within the data storage device according to an embodiment of the present invention. For example, the data storage device 100 in diagram 600 may be a hard disk drive. The data storage device includes one or more magnetic disks 105 as a storage medium, and a hard disk drive controller 150. An auxiliary key is stored on the hard disk controller 150 during the manufacture of the hard disk controller 150. The auxiliary key is used to decrypt and encrypt the private key stored in a reserved area of the magnetic disk 105. For example, the auxiliary key may be a key which is unique to each data storage device, or may be shared with one or more devices. A ROM or flash ROM may be used to store the auxiliary key, or the auxiliary key may be stored in fuses or antifuses within the controller. For drives utilizing flash ROM, the auxiliary key may be unique to each data storage device. Alternatively, for data storage devices utilizing factory masked ROM, each batch of data storage devices being produced will share a similar auxiliary key. This will make it difficult to obtain the private key, as specialized knowledge of drive microcode or hardware intervention will be required in order to read the contents of the ROM.

One exemplary implementation of an auxiliary key is as an auxiliary key used in symmetric or private-key cryptography, which differs from public key cryptography. In private-key cryptography, a single key is used to encrypt and decrypt the message or relevant information, instead of using public and private keys for decryption. The auxiliary key may be a common auxiliary key which is shared amongst a batch of data storage devices manufactured together, or may be shared amongst all data storage devices of the same model. Alternatively, the auxiliary key may be unique to the data storage device 100. Even obtaining the auxiliary key does not allow one access to the unique private key. The auxiliary key is only used by the hard disk controller 150 to encrypt and decrypt the private key of the data storage device 100 and is not very vulnerable.

The private key of data storage device 100 is stored in reserved areas or sectors 602 of the magnetic disk 105, which are outside of normally addressable areas for the data storage device 100, and is encrypted by the auxiliary key. The private key is secure on the surface of the magnetic disk 105 against attackers that can change the circuit boards or IC chips within the data storage device 100 and read the reserved area. The combination of the use of the private key along with an auxiliary key to encrypt and decrypt the private key allows for an additional layer of inexpensive protection against attackers. By using a unique private key, individual data storage devices can now be individually identified or revoked if the private keys are compromised or used in ways that violate licensing agreements.

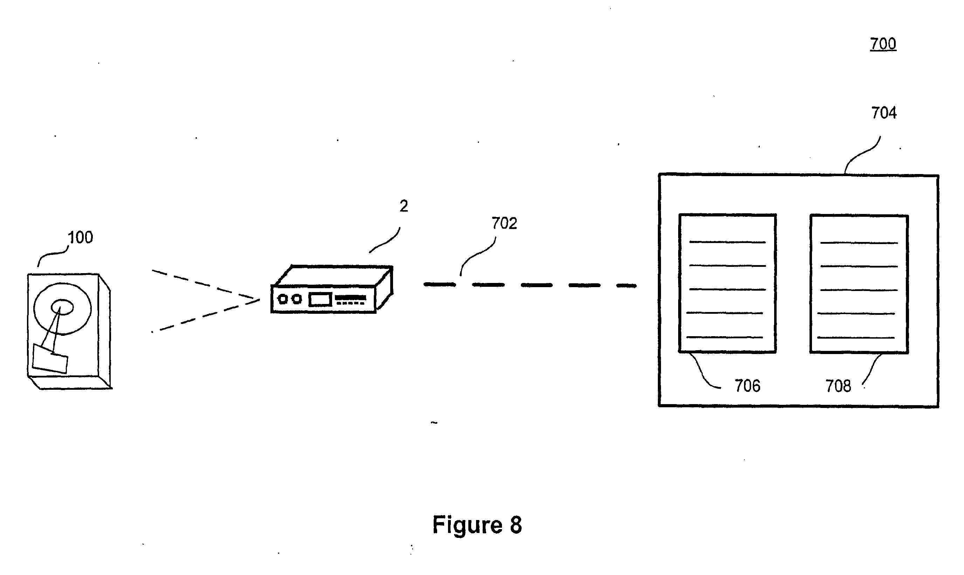

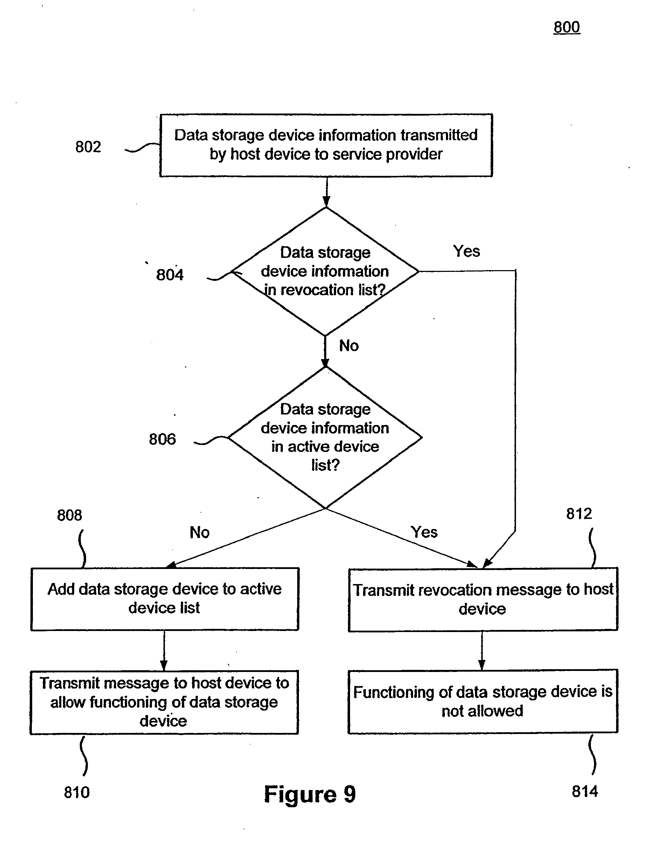

Fig. 8 is an exemplary simplified diagram of a host device communicating with a service provider to verify and register a data storage device for use with the host device according to an embodiment of the present invention. For example, if the encryption of the private or public keys on the data storage device 100 is broken, a revocation procedure may be used whereby a single compromised private key cannot be simultaneously used by multiple data storage devices 100. By doing so, the economic benefit to cloning or copying a data storage device 100 is greatly reduced. Fig. 8 may also be more properly understood in conjunction with Fig. 9, which is an exemplary simplified flowchart of a host device communicating with a service provider to verify and register the data storage device within the host device according to an embodiment of the present invention. Flowchart 800 includes step 802 for transmitting the data storage device information from the host device to the service provider, step 804 for checking the data storage device information against a revocation list, step 806 for checking the data storage device information against a active device list at the service provider, step 808 for adding the data storage device information to the active device list, step 810 for transmitting a message to the host device to allow for functioning of the data storage device, step 812 for transmitting a revocation message to the host device, and step 814 for not permitting further functioning of the data storage device. Of course, there can be other variations, modifications, and alternatives.

The host device 2 which contains the data storage device 100, has a connection 702 to a service provider 704. The connection 702 may be a physical connection such as an Ethernet wire, coaxial cable, or other wire, or a wireless connection established through a variety of different wireless protocols, including but not limited to TCP/IP, 802.11, Bluetooth, and radio signals. For example, the connection 702 may go through the Internet or other switching stations which allow for a connection to be formed between the data storage device 100 and the service provider 704. The service provider 704 is a third party which maintains a list of active devices currently in use 706. A revocation list 708 of revoked drives may also be maintained by the service provider 704. For example, the revocation list 708 may list drives which have been compromised or where duplicate drives have been previously detected. The service provider 704 may be the manufacturer of the data storage device 100, the manufacturer of the host device 2, or a third party contracted to provide further authentication functionality to the data storage system 700. The service provider may also be a certificate authority.

Prior to beginning the process flow 800, the process flow 320 in Fig. 4 may have been performed to authenticate the host device 2 with the data storage device 100. Despite the authentication between the data storage device 100 and the host device 2 achieved in step 314, additional precautions may be put in place to require network validation with the service provider 704 before operation of the host device 2 and/or the data storage device 100 is permitted. These precautions can be put into place to prevent duplicate data storage devices which possess the same data storage device information as other data storage devices from being operated. The process flow 800 may also be initiated with a variety of conditions, including but not limited to replacement of a data storage device 100 in the host device 2, an initial usage of the host device 2, or periodically reaffirming the validity of the data storage device 100 within the host device 2.

In step 802, the host device 2 transmits the data storage device information to the service provider 704 through the connection 702. The host device 2 is typically used to transmit the information because the data storage device 100 may or may not possess the capability for data transmittal to an outside party other than the host device 2. The data storage information being transmitted may comprise identification information used to distinguish each individual data storage device from others. For example, the data storage information may be a unique serial number of the data storage device 100 or the unique private key of the data storage device in an encrypted form, or other distinguishing information. The unique private key of the data storage device may be decrypted by the service provider 704 and authentication subsequently performed. A digital certificate may also be transmitted with the private key, the digital certificate being issued by a certificate authority and comprising of a public key of the data storage device encrypted with a private key of the certificate authority. If the information is not received by the service provider 704, a resend of the data may be performed until a preset timeout condition is reached or the data is received successfully by the service provider 704.

In step 804, the service provider 704 determines if the received data storage device information from the host device 2 is in the revocation list 708 of previously revoked data storage devices. The revocation list 708 may include a list of data storage device information which identifies data storage devices that have been registered previously as duplicated or compromised drives. The revocation list 708 may be maintained automatically by software or modified by a system administrator. If the data storage device information matches that of a device on the revocation list, steps 812 and 814 are performed. Otherwise, step 806 is performed.

In step 806, the data storage device information is compared against the active device list 706. The service provider 704 maintains a list of active data storage devices in use and checks the data storage device information against that list to determine if the data storage device 100 is in use in two different locations. If this is true, the data storage device 100 may have been cloned or otherwise duplicated and one or both of the drives may be in violation of a license agreement for either the data storage device 100 or the host device 2. If this occurs, steps 812 and 814 are performed. Alternatively, steps 808 and 810 are performed.

The service provider 704 may store additional information other than the list of active data storage devices. For example, the service provider may maintain the log of all data storage devices that have previously registered or attempted to register with the service provider 704, along with the internet protocol (IP) address used by the host device. By doing so, the service provider 704 may combine the functionality of the revocation list 708 and the active device list 706 in one list. For example, steps 804 and 806 may be combined into a single step depending upon the specific implementation of the list(s) stored by service provider 704.

If the data storage device information sent from the host device 2 does not match any data storage devices on either the revocation list 708 or the active device list 706, step 808 is performed. The data storage device information is added to the active device list 706, thus registering the data storage device 100 with the service provider 704. Following this registration, a confirmation message is sent to the host device 2 from the service provider 704 allowing for functioning of the data storage device 100 in step 810. For example, additional functionality such as internet connections to registered servers or the download of registered materials or media may be enabled following step 810.

If the data storage device information sent from the host device 2 does match any data storage devices on either the revocation list 708 or the active device list 706, step 812 is performed. A revocation message is sent from the service provider 704 to the host device 2 to notify host device 2 of the rejected status of data storage device 100. In step 814, the functioning of the data storage device 100 in host device 2 is not allowed. For example, the data stored on the data storage device 100 is not accessed by host device 2 and may be locked out until a successful validation state can be achieved with service provider 704 or other corrective action is undertaken. Other steps may additionally be taken to further restrict the operation of the data storage device 100. For example, the digital certificate of the data storage device 100 may be revoked by the certificate authority, thus preventing the data storage device 100 from operating with any host device 2.

It is to be understood that the above description is intended to be illustrative and not restrictive. Many embodiments will be apparent to those of skill in the art upon reviewing the above description. The scope of the invention should, therefore, be determined not with reference to the above description, but instead should be determined with reference to the appended claims along with their full scope of equivalents, as interpreted by the description and drawings.

## Claims

1. A data storage device comprising:
a magnetic disk;
a head assembly having a read/write head which reads and writes data from/on the magnetic disk;
a controller configured to control the head assembly to read/write data to/from the magnetic disk;
a secure area of the magnetic disk containing a private key, the private key being one of a pair of cryptographically linked keys which includes the private key and a public key; and
a memory located within the controller and containing an auxiliary key, the auxiliary key being used to encrypt or decrypt the private key.

2. The data storage device of claim 1 wherein the controller further comprises:
a hard disk drive control unit configured to transfer data between an external host and the magnetic disk generating a position error signal from servo data and transmit positional information about the head assembly to a read/write controller;
a spindle NCM driver configured to control movement of an actuator arm over the magnetic disk, the head assembly being mounted on the actuator arm, and to control movement of the magnetic disk;
a microprocessor configured to interpret commands transmitted from the hard disk drive controller and instruct the hard disk drive controller to perform a read/write operation based on the address specified by a command;
a head IC unit configured to receive and communicate data to and from the head assembly; and
an IC position converter which determines the position of the head assembly.

3. The data storage device of claim 1 wherein the secure area of the magnetic disk is outside the normally addressable areas of the magnetic disk.

4. The data storage device of claim 1 wherein the memory is a read-only memory or a write-once memory.

5. The data storage device of claim 1 wherein the memory is a write-once memory including a fuse or an antifuse within the controller that can be programmed once.

6. The data storage device of claim 1 wherein the auxiliary key is symmetric key.

7. The data storage device of claim 1 wherein the auxiliary key is a shared with one or more other data storage devices.

8. The data storage device of claim 1 wherein the auxiliary key is unique to the data storage device.

9. The data storage device of claim 1 wherein the private key is encrypted and decrypted within the controller and does not pass through any data buses in unencrypted form.

10. The data storage device of claim 1 wherein a digital certificate from a certificate authority is stored with the private key, the digital certificate comprising the public key of the data storage device and a unique identifier for the storage device which are encrypted with a private key of the certificate authority.

11. A host device used for media applications comprising:
a data storage device as recited in claim 1;
a host device controller configured to enable read/write access to the data storage device, the host device controller further configured to receive data stored on the data storage device and transmit the data to an output device connected to the host device; and
a communication bus configured to allow data to be transferred between the device controller and the storage device.

12. The host device of claim 11 further comprising an input device configured to provide input for operation of the host device.

13. A data storage device comprising:
a magnetic disk;
a head assembly having a read/write head which reads and writes data from/on the magnetic disk;
a controller configured to control the head assembly to read/write data to/from the magnetic disk, and
a memory located within the controller and containing a private key, the private key being one of a pair of cryptographically linked keys, the other of the cryptographically linked keys being a public key.

14. The data storage device of claim 13 wherein the private key is a common private key shared with one or more other data storage devices.

15. The data storage device of claim 13 wherein the private key is unique to the data storage device.

16. A device management system comprising:
a host device;
a data storage device coupled to the host device, the data storage device having a unique identifier used to distinguish the data storage device from other data storage devices;
a service provider which maintains a list of active data storage devices which are already in use, the service provider receiving the unique identifier from the host device and comparing the unique identifier with a list of active data storage devices to determine if the unique identifier is already in use; and
a communication connection used to transmit information between the host device and the service provider.

17. The device management system of claim 16 wherein the service provider further maintains a revocation list of data storage systems whose unique identifiers have been compromised or duplicated.

18. The device management system of claim 16 wherein the service provider further maintains a list of all data storage devices that have been previously registered or attempted to register with the service provider.

19. The device management system of claim 16 wherein:
if the unique identifier from the data storage device matches a unique identifier of another data storage device on the list of active data storage devices, a revocation message is transmitted to the host device and functioning of the data storage device with the host device is not permitted.

20. The device management system of claim 16 wherein if the unique identifier from the data storage device does not match any unique identifiers of another data storage device on the list of active data storage devices:
the unique identifier of the data storage device is added to the list of active data storage devices; and
a message is transmitted to the host device to allow for functioning of the data storage device with the host device.

21. The device management system of claim 16 wherein at least part of the communication connection is through the Internet.

22. A method of validating a media device comprising:
providing a data storage device coupled with a host device, the data storage device having a unique identifier that distinguishes it from other data storage devices;
submitting the unique identifier through the host device to a service provider;
checking the unique identifier against a list of active devices in operation to determine if a data storage device with the same unique identifier is already in operation; and
if a data storage device with the same unique identifier is already in operation, transmitting a revocation message to the host device and not allowing the data storage device to operate with the host device.

23. The method of claim 22 further comprising:
if a data storage device with the same unique identifier is not in operation, adding the data storage device to the list of active devices in operation, and transmitting a message from the service provider to the host device to allow for functioning of the data storage device with the host device.

24. The method of claim 22 further comprising:
checking the unique identifier against a revocation list comprising a list of data storage devices whose unique identifies have been compromised or duplicated; and
if the unique identifier matches one or more entries on the revocation list, transmitting a revocation message to the host device and not allowing the data storage device to operate with the host device.

25. The method of claim 22 wherein the service provider is also a certificate authority.

26. The method of claim 22 wherein the unique identifier is encrypted prior to submitting the unique identifier through the host device to a service provider.

27. The method of claim 22 wherein the unique identifier is a serial number of the data storage device.

28. A data storage device comprising: a magnetic disk;
a head assembly having a read/write head which reads and writes data from/on the magnetic disk;
a controller configured to control the head assembly to read/write data to/from the magnetic disk;
a secure area of the magnetic disk containing a private key, the private key being a symmetric key; and
a memory located within the controller and containing an auxiliary key, the auxiliary key being used to encrypt or decrypt the private key.

29. The data storage device of claim 28 wherein the secure area of the magnetic disk is outside the normally addressable areas of the magnetic disk.
